Europäisches Patentamt

European Patent Office

Office européen des brevets

(11) Veröffentlichungsnummer: **0 444 527 A1**

## (12) EUROPÄISCHE PATENTANMELDUNG

(21) Anmeldenummer: 91102516.1

(22) Anmeldetag: 21.02.91

(51) Int. Cl.5: **G05D 23/19, B60H 1/00**

(30) Priorität: 28.02.90 DE 4006187

(43) Veröffentlichungstag der Anmeldung:
**04.09.91 Patentblatt 91/36**

(84) Benannte Vertragsstaaten:
**DE FR GB IT**

(71) Anmelder: **Iveco Magirus Aktiengesellschaft
Schillerstrasse 2 Postfach 27 40
W-7900 Ulm/Donau(DE)**

(72) Erfinder: **Bartsch, Erhard
Schwalbenstrasse 9
W-7916 Nersingen(DE)**

(74) Vertreter: **Socha, Peter, Dipl.-Ing.
Iveco Magirus AG Patentabteilung Postfach
27 40 Schillerstrasse 2
W-7900 Ulm(DE)**

(54) Verfahren und Anordnung zur Regelung der Temperatur in einem Nutzfahrzeug-Fahrerhaus mit Fahrerhaus-Innentemperatur-Anzeige.

(57)
2.1. Bekannte automatische und programmierbare Regelungen der Temperatur von Fahrerhäusern haben zwar eine über ein Display angezeigte Sollwertangabe, dieser Sollwert ist jedoch auf einen bestimmten fixierten Schnittpunkt, auf einen fiktiven Wert in einer eventuell vorgegebenen Innenraum-Temperatur-Kennlinie festgelegt.

2.2. Erfindungsgemäß ist vorgesehen, daß am Display der Bedieneinheit stets der tatsächlich der jeweiligen Außentemperatur zugeordnete Sollwert (und damit indirekt die Innenraumtemperatur) angezeigt wird.

Rank Xerox (UK) Business Services

Die Erfindung betrifft ein Verfahren und eine Anordnung zur Regelung der Temperatur in einem Fahrerhaus eines Nutzfahrzeuges, insbesondere Lastkraftwagens, wobei eine Elektronikeinheit vorgesehen ist, mit einem von der Außentemperatur gemäß einer vorgegebenen Sollwert-Kennlinie gesteuerten Sollwertsteller für die Fahrerhaus-Innentemperatur und mit zumindest einem auf Heiz- und Kühleinrichtungen des Fahrzeugs einwirkenden Regelkreis zum Regeln der Innentemperatur auf den jeweils eingestellten Sollwert, sowie mit einer Anzeigeeinrichtung im Fahrerhaus zur Anzeige einer Fahrerhaus-Innentemperatur.

Fahrerhaustemperatur-Kennlinien für programmierbare und automatisch geregelte Heizungs- und Klimaanlagen mit Sollwert-Einstellung und Sollwert-Anzeige sind existent. Bei manchen ist der von einer Benutzungsperson eingestellte Temperaturwert angezeigt (bzw. Innenraumtemperaturanzeige).

Aus DE-OS 34 24 366 ist ein Verfahren und eine Vorrichtung zur Regelung der Temperatur in einem Nutzfahrzeug-Fahrerhaus der eingangs genannten Art bekannt, wobei ein einziger Regelkreis auf Heiz- und Kühleinrichtungen des Fahrzeugs einwirkt, um die Innenraumtemperatur auf den jeweils eingestellten Sollwert zu regeln. Der einzige Regelkreis steuert Motorheizung, Klimaanlage sowie eine Zusatzheizung im Heizwasserkreislauf, welcher zusätzlich den Kraftstoff vorheizt.

Die bekannten automatischen und programmierbaren Regelungen haben zwar eine über eine Anzeigeeinrichtung angezeigte Sollwertangabe, dieser Sollwert ist jedoch auf einen bestimmten, fixierten Schnittpunkt, auf einen fiktiven Wert in einer eventuell vorgegebenen Innenraumtemperatur-Kennlinie festgelegt. Der Nachteil ist dabei, daß der momentan der jeweiligen tatsächlichen Außentemperatur zugeordnete Innenraumtemperaturwert, d.h. der tatsächliche Sollwert nicht angezeigt wird. Dies bedeutet, daß der an der Anzeigeeinrichtung angezeigte Temperaturwert nicht mit der tatsächlich vorherrschenden Temperatur im Fahrerhaus übereinstimmt. Dies kann zum einen bei Fahrer und Beifahrer in einem Fahrerhaus zu einem subjektiven Unbehaglichkeitsempfinden führen und zum anderen eine Bedienungsperson im Fahrerhaus veranlassen, eine "Nachregelung" der Fahrerhaus-Innentemperatur von Hand durch Sollwertverstellung der Kennlinie vorzunehmen. Eine derartige "Nachregelung" ist nicht nur überflüssig, sondern führt genau zum Gegenteil: sie "deoptimiert" die an sich gut ausgelegte Temperaturregelanlage, die normalerweise im Betrieb zuverlässig und weitgehend automatisch die Fahrerhaus-Innentemperatur objektiv einregelt, und zwar innerhalb eines relativ großen Außenluft-Temperaturintervalls von weit unterhalb des Gefrierpunktes bis weit oberhalb des Gefrierpunkts, mithin also alle auftretenden Betriebsfälle umfaßt.

Aufgabe der Erfindung ist die Verbesserung der vorgenannten Regelanordnung mit Hilfe einfacher Mittel dahingehend, daß Fehlbetreibungen eines Benutzers weitgehend vermeidbar sind.

Gelöst wird die der Erfindung zugrundeliegende Aufgabe durch ein Verfahren und eine Vorrichtung der in den Ansprüchen 1 und 2 beschriebenen Art.

Vorteilhaft weitergebildet wird der Erfindungsgegenstand nach den Unteransprüchen 3 bis 9.

Wesen der Erfindung ist die Abstimmung und Auslegung einer Elektronikeinheit dahingehend, daß stets die vorgegebene Temperatur-Kennlinie in Abhängigkeit der Außentemperatur abgefragt wird und, der jeweiligen Außentemperatur zugeordnet, der jeweilige tatsächliche Sollwert (die tatsächliche Innenraumtemperatur) an der Anzeigeeinrichtung angezeigt wird. Dieser aktuelle Sollwert wird von der automatischen Regelung selbständig "angefahren" und gehalten. Die Anzeigevorrichtung widerspiegelt damit die jeweilige Innenraumtemperatur, welche die Automatik bezogen auf die jeweilige Außentemperatur einstellt.

Wird die Basis-Sollwert-Kennlinie von einer Bedienungsperson aus Gründen der persönlichen Behaglichkeit nach oben oder nach unten zu der und von der Außentemperatur-Achse verschoben, so wird zweckmäßigerweise gleichwohl an der Anzeigeeinrichtung der Bedieneinheit stets der tatsächlich der jeweiligen Außentemperatur zugeordnete Sollwert (und damit indirekt die Innenraumtemperatur) angezeigt.

Besonderer Vorteil der Erfindung ist, daß mit Hilfe einfacher Mittel eine hektische Nachregelung der Bedienungsperson vermieden werden kann, da stets der tatsächliche bzw. der von der Elektronik selbsttätig angefahrene Sollwert, welcher direkt der tatsächlichen Innenraumtemperatur entspricht, am Display angezeigt wird. Ferner wird ein Einfluß durch geöffnete Fenster oder Türen vermieden, wie dies der Fall wäre, wenn nur die Innenraumtemperatur am Display angezeigt werden würde, die sich bei einem Öffnen von Fenstern und Türen verändert.

Zweckmäßigerweise wird über den gesamten Außentemperaturbereich als Sollwert-Kennlinie eine sog. "Badewannen"-Charakteristik gewählt, die in etwa einem parabelförmigen Kurvenverlauf angenähert ist. Bei einer Außentemperatur von ca. 15°C erreicht die Parabel ihr Minimum von ca. 23°C Innentemperatur. Bei Außentemperaturen über oder unter 15°C liegen die Innentemperaturen über 23°C (z.B. bei -30°C außen +27°C innen; bei +50°C außen + 28°C innen). Da eine parabelförmige Regelkurve entsprechend einem optimalen menschlichen Behaglichkeitsempfinden komplizierte elektronische Schaltungselemente erforderlich machen würde, werden lineare Sollwert-Kennlinienabschnitte gewählt, die in ihrer Gesamtheit der vorgenannten "Badewannen"-Charakteristik entsprechen. Im unteren Bereich von Außentemperaturen unterhalb etwa 10°C hat die Sollwert-Kennlinie eine negative Steigung und im oberen Bereich von Außentemperatur oberhalb etwa 20°C eine positive Steigung.

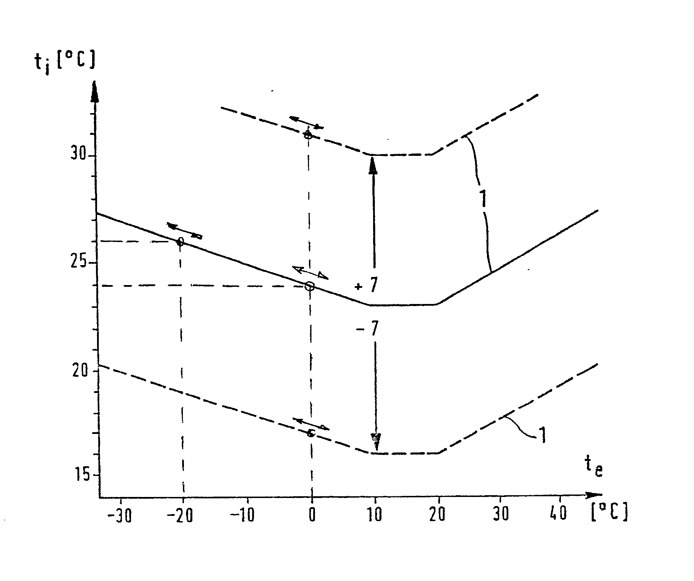

Die Erfindung wird nachfolgend anhand eines Ausführungsbeispiels unter Bezugnahme auf die aus einer einzigen Figur bestehende Zeichnung näher erläutert.

In der Zeichnung ist die Sollwert-Kennlinie der Anordnung zur Regelung der Temperatur in einem Nutzfahrzeug-Fahrerhaus dargestellt, wobei auf der Abszisse die Außentemperatur und auf der Ordinate die Fahrerhausinnentemperatur aufgetragen ist.

Die physiologischen und thermodynamischen Anforderungen an ein automatisches Temperaturregelsystem in Fahrzeugen sind in der Literatur ausführlich beschrieben und hinreichend bekannt. Grundsätzlich ist festzustellen, daß es die Aufgabe jedes diesbezüglichen Regelsystems ist, bei allen im Fahrbetrieb vorkommenden Betriebszuständen solche klimatischen Verhältnisse im Innenraum einzustellen und zu regeln, deren Kennwerte sich innerhalb der Behaglichkeitsgrenzen bewegen.

Bei Lastkraftwagen mit Schlafkabine muß der Bereich der Fahrerhaus-Temperaturregelung zusätzlich auf die Stammbetriebsphase ausgeweitet werden, da auch bei Motorstillstand (z.B. beim Übernachten) ein angenehmes, vorgewähltes Temperaturniveau vorausgesetzt wird.

Die in der Zeichnung nicht veranschaulichte und für die Erfindung nicht weiter interessierende Gesamtanlage eines Heizungs- und Klimaanlagesystems bestehend aus Motorheizung, Zusatzheizung im Heizwasserkreislauf mit Kraftstoffvorheizung und Klimaanlage umfaßt einen einzigen zusammenhängenden Regelkreis für die vorgenannten Geräte, die als Regler in den Regelkreis geschaltet sind.

Im Regelkreis ist ferner eine außentemperaturgesteuerte Gebläseregelung integriert.

Im Fahrerhausinnenraum befindet sich im Bedienungsteil der Heizung neben oder unter der Vorwahluhr für die Zusatzheizung in einer z.B. für einen Kippschalter vorgesehenen Ausstanzung ein Innenraumtemperaturfühler, welcher im Betrieb die Istwerte der einzuregelnden Temperatur liefert.

Um die Außentemperatur zu messen, ist ein Außentemperaturfühler am Frischlufteintritt der Heizung montiert.

Die Klimaanlage (Verdampfer) umfaßt einen an sich bekannten Verdampfertemperaturfühler, der von vorn durch die Frischluftöffnung in den Verdampfer geschoben ist.

Als weiterer Temperaturfühler des Regelsystems ist ein Blastemperaturfühler vorgesehen, der als Sensor im Raum zwischen den Gebläsen angebracht ist.

Sämtliche vorgenannten Temperaturfühler im bzw. am Heizgerät/Klimaanlage sind im Hinblick auf einen leichten Ausbau bei Fühlerschäden in einer Weise verkabelt, daß eine Trennstelle vorgesehen ist.

Die Anordnung zur Regelung der Temperatur im Fahrerhaus umfaßt ferner einen von der Außentemperatur gemäß einer vorgegebenen Sollwert-Kennlinie gesteuerten Sollwertsteller für die Innentemperatur, wobei im (einzigen) Regelkreis des Systems die Innentemperatur auf den jeweils eingestellten Sollwert geregelt wird. Die Sollwert-Kennlinie (1) besitzt einen wannenförmigen Verlauf mit drei linearen Sollwert-Kennlinienabschnitten. Im unteren Bereich von Außentemperaturen unterhalb etwa 10°C hat der Kennlinienabschnitt eine negative Steigung dergestalt, daß bei einer Außentemperatur von ca. -30°C eine Fahrerhausinnentemperatur von ca. 27°C und bei einer Außentemperatur von + 10°C eine Innentemperatur von ca. 23°C gegeben ist.

Im oberen Bereich von Außentemperaturen oberhalb etwa 20°C schließt sich ein linearer Sollwert-Kennlinienabschnitt mit positiver Steigung in einer Weise an, daß bei ca. 20°C Außentemperatur eine Innentemperatur von ca. 23°C und bei einer Außentemperatur von ca. 50°C eine Fahrerhaus-Innentemperatur von ca. 27°C gegeben ist.

Beide vorgenannten linearen Sollwert-Kennlinienabschnitte sind zwischen 10°C und 20°C Außentemperatur durch einen linearen mittleren Sollwert-Kennlinienabschnitt verbunden, der parallel zur Außentemperatur-Achse (Abszisse) verläuft.

Um das Regelfeld der Temperaturkurve zu erhöhen, kann der Fahrer oder Beifahrer individuell nach seinen Wünschen die vorgenannte Badewannen-Regelcharakteristik nach oben und unten um maximal ±7°C manuell verstellen, so daß auf einfache Weise eine individuelle Behaglichkeitsstufe eingestellt werden kann. Dadurch wird dem Fahrer bzw. Beifahrr die Möglichkeit gegeben, das bei Sonneneinstrahlung entstehende Gefühl der Überhitzung im Fahrerhaus besser regeln zu können.

Bei einem Standheizbetrieb kann die vorgenannte Badewannen-Regelcharakteristik automatisch aus der (in ausgezogener Linie veranschaulichten) Normallage um ca. 10°C nach unten abgesenkt werden. Dies ergibt insbesondere nachts beim Schlafen der Fahrzeuginsassen sowie allgemein in deren Ruhephasen eine bessere Behaglichkeit bei geringem Kraftstoffverbrauch der Zusatzheizung.

Die vorgenannte Sollwert-Kennlinie für eine programmierbare und automatisch geregelte Heizungs- und Klimaanlage mit Sollwerteinstellung ist Teil der Software einer Elektronikeinheit, welche auch mit einer Display-Anzeige bzw. Anzeigeeinrichtung im Fahrerhaus gekoppelt ist, welche die Innentemperatur des Fahrerhauses anzeigt. Die Elektronikeinheit ist dahingehend abgestimmt und ausgelegt, daß diese selbständig über den gesamten Bereich der vorgegebenen Sollwert-Kennlinie (Innentemperatur-Kennfeld) folgt und am Display der Bedieneinheit der der Außentemperatur zugeordnete Sollwert erscheint und damit die zugeordnete Innenraumtemperatur. Dieser Sollwert wird mit dem des Innenraumfühlers verglichen und abgeglichen, so daß damit auch stets der angezeigte Sollwert und die tatsächliche Innenraumtemperatur gleich sind. Dies bedeutet auch, nachdem die Elektronik Sollwert, Innenraumtemperatur und Außentemperatur vergleicht, daß bei Änderung der Außentemperatur sich auch die tatsächliche Innenraumtemperatur verändert und "diesen Sollwert" stets aktuell am Display anzeigt. Dies trifft sowohl für die Basis-Kennlinie gemäß Zeichnung in ausgezogener Linie zu als auch für die von einer Bedienungsperson aus Behaglichkeitsgründen nach oben oder unten verschobenen gemäß Zeichnung strichlierten Kennlinie.

Somit können Fenster und Türen des Fahrerhauses kurzzeitig geöffnet werden, da die Innenraumtemperaturregelung von der Außentemperatur abhängt. Eine hektische Nachregelung des Betreibers ist damit ausgeschlossen. Da ferner am Display der wahre Innenraum-Temperaturwert (indirekt) angezeigt wird, wird auch die Bedienungsperson kaum veranlaßt, eine überflüssige Nachregelung des Systems deshalb vorzunehmen, weil - wie nach dem Stand der Technik - die in aller Regel nicht gerade vorherrschende Innentemperatur des Fahrerhauses am Display angezeigt wird.

Nach dem Stand der Technik gemäß DE-OS 34 24 366 erfolgt zwar eine optimale automatische Temperaturregelung gemäß Sollwert-Kennlinie (1) der Zeichnung. Die Anzeige der Temperatur im Fahrerhaus ist jedoch auf eine fiktive Außentemperatur, z.B. auf 0°C gemäß strichlierter Linie der Zeichnung bezogen. Entsprechend wird bei einer Basis-Kennlinie ein Innenraum-Temperaturwert in der Größenordnung von 24°Cangezeigt. Wird die Basis-Kennlinie nicht nach unten oder oben verschoben, wird fortwährend der konstante Innenraum-Temperaturwert von ca. 24°C angezeigt, auch bei veränderten Außentemperaturen. Demgegenüber wird bei der Erfindung - bezogen auf die Basis-Kennlinie - bei einer Außentemperatur von z.B.-20°C die tatsächliche Innenraumtemperatur von ca. 26°C angezeigt.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

**Patentansprüche**

1. Verfahren zur Regelung der Temperatur in einem Fahrerhaus eines Nutzfahrzeuges, insbesondere Lastkraftwagens, wobei eine Elektronikeinheit vorgesehen ist, mit einem von der Außentemperatur gemäß einer vorgegebenen Sollwert-Kenlinie (1) gesteuerten Sollwertsteller für die Fahrerhaus-Innentemperatur und mit zumindest einem auf Heiz- und Kühleinrichtungen des Fahrzeugs einwirkenden Regelkreis zum Regeln der Innentemperatur auf dem jeweils eingestellten Sollwert, sowie mit einer Anzeigeeinrichtung im Fahrerhaus zur Anzeige einer Fahrerhaus-Innentemperatur,
dadurch gekennzeichnet,
daß durch die Elektronikeinheit stets die vorgebene Sollwert-Kennlinie (1) in Abhängigkeit der tatsächlichen jeweiligen Außentemperatur hinsichtlich des tatsächlichen jeweiligen Sollwerts abgefragt und daß der tatsächliche jeweilige Sollwert an der Anzeigeeinrichtung als Fahrerhaus-Innentemperatur angezeigt wird.

2. Anordnung zur Durchführung des Verfahrens nach Anspruch 1, gekennzeichnet durch eine Elektronikeinheit zur Abfrage einer vorgegebenen Sollwert-Kennlinie (1) in Abhängigkeit der jeweiligen tatsächlichen Außentemperatur und Anzeige des abgefragten tatsächlichen jeweiligen Sollwerts im Fahrerhausinnern, wobei die Basis-Sollwert-Kennlinie (1) von einer Bedienungsperson zumindest in Richtung zu und von der Außentemperatur-Achse verstellbar ist, d.h. zumindest nach unten und nach oben manuell verschoben werden kann.

3. Anordnung nach Anspruch 2,
dadurch gekennzeichnet,
daß die Sollwert-Kennlinie (1) einen wannenförmigen Verlauf hat mit negativer Steigung im unteren Bereich von Außentemperaturen unterhalb etwa 10°C und positiver Steigung im oberen Bereich von Außentemperaturen oberhalb etwa 20°C.

4. Anordnung nach einem der Ansprüche 2 oder 3,
dadurch gekennzeichnet,
daß im unteren Bereich nur die Heizanlage und im oberen Bereich nur die Klimaanlage und im dazwischenliegenden mittleren Bereich beide Anlagen als Regler in einen einzigen Regelkreis für Motorheizung, Klimaanlage und Zusatzheizung geschaltet sind.

5. Anordnung nach einem der Ansprüche 2 bis 4,
dadurch gekennzeichnet,
daß eine außentemperaturgesteuerte Gebläseregelung im Regelkreis integriert ist.

6. Anordnung nach einem der Ansprüche 2 bis 5,
dadurch gekennzeichnet,
daß im Fahrerhausinnenraum ein Luftfeuchtefühler als zusätzlicher Parameter zur Temperaturregelung vorgesehen ist.

7. Anordnung nach einem der Ansprüche 2 bis 6,
dadurch gekennzeichnet,
daß beim Starten des Motors selbsttätig die Zusatzheizung aktiviert wird.

8. Anordnung nach einem der Ansprüche 2 bis 7,
dadurch gekennzeichnet,
daß das Temperaturregelsystem bei Betätigung des Fahrzeug-Betriebsschalters selbsttätig aktiviert wird.

9. Anordnung nach einem der Ansprüche 2 bis 8,
dadurch gekennzeichnet,
daß bei einem Standheizbetrieb die Sollwert-Kennlinie (1) automatisch um ca. 10°C zur Außentemperatur-Achse nach unten verschoben wird.

**Europäisches Patentamt**

# EUROPÄISCHER RECHERCHENBERICHT

Nummer der Anmeldung

## EP 91 10 2516

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 681 153  (N. UCHIDA)<br>* Spalte 8, Zeilen 1 - 22; Figur 1 * * Spalte 17, Zeilen 16 - 23 * | 1-9 | G 05 D 23/19<br>B 60 H 1/00 |
| A,D | DE-A-3 424 366  (IVECO MAGIRUS AG)<br>* das ganze Dokument * | 1-9 | |
| A | US-A-4 617 986  (S. KOBAYASHI ET AL.)<br>* Spalte 3, Zeile 49 - Spalte 5, Zeile 27; Figuren 1, 5 * | 1-9 | |
| A | DE-C-3 409 321  (ROBERT BOSCH GMBH)<br>* Spalte 4, Zeilen 7 - 24 * * Spalte 4, Zeile 66 - Spalte 5, Zeile 52; Figuren 2, 4 * | 1-9 | |

|  | RECHERCHIERTE SACHGEBIETE (Int. Cl.5) |
|---|---|
| | G 05 D<br>B 60 H |

Der vorliegende Recherchenbericht wurde für alle Patentansprüche erstellt

| Recherchenort | Abschlußdatum der Recherche | Prüfer |
|---|---|---|
| Den Haag | 15 April 91 | HELOT H.V. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument